# NEW EUROPEAN PATENT SPECIFICATION

(11) **EP 0 303 740 B2**
(45) Date of publication and mention of the opposition decision: **25.10.2000**
(45) Mention of the grant of the patent: 24.05.1995
(21) Application number: 87202037.5
(22) Date of filing: 13.12.1983
(51) Int. Cl.: G02B 6/44

(54) **An assembly comprising a high voltage conductor and a fibre optic cable**
Anordnung mit einem Hochspannungs- und einem Faseroptikkabel
Assemblée comprenant un conductor haute tension et un câble à fibres optiques

(30) Priority: 13.12.1982 GB 8235441; 22.04.1983 GB 8311048
(43) Date of publication of application: 22.02.1989
(62) Divisional of application: 83307592.2
(73) Proprietor: FOCAS LIMITED, London EC1A 4EJ (GB)
(72) Inventor: Claburn, Robin James, Swindon Wiltshire (GB); Atkins, Alan Duncan, Swindon Wiltshire (GB); Looms, John Sidney Thomas, East Molesey Surrey (GB)
(74) Representative: Baverstock, Michael George Douglas

(56) References cited:
- AU-D- 8 420 282
- DE-A- 2 034 884
- DE-A- 2 841 828
- DE-A- 2 847 384
- DE-A- 2 901 872
- DE-A- 2 929 968
- GB-A- 1 356 047
- GB-A- 1 365 349
- GB-A- 2 074 753
- GB-A- 2 083 647
- DISTRIBUTION DEVELOPMENTS, September 1982, pp. 3-5

## Description

This invention relates to an assembly comprising a high voltage conductor and a fibre optic cable located externally of the conductor so as to be subjected to the electric field thereof.

By a high voltage conductor is meant a conductor rated at 1kV or above, for example a 33kV or 400kV power conductor.

The use of a fibre optic cable in association with a high voltage conductor is known from GB-A-2083647 and GB-A-2101351. These publications disclose assemblies in which a fibre optic cable extends inside a high voltage conductor and thus is not subject to its electric field. An article in Distribution Developments (September, 1982) discloses the mounting of a fibre optic cable having an outer sheath manufactured from a non-tracking low erosion compound on an overhead conductor.

The fibre optic cable may carry optically encoded data which may be in either digital or analogue form, and such data may be used for the monitoring and control of an electrical network of which the conductor, for example, forms part. However, the cable may be employed for the transmission of data not relevant to the operation of the network, such data including telecommunications and similar signals normally carried by fibre optic links. Furthermore, it is envisaged that the fibre optic cable could itself serve as a sensor to monitor the operating parameters of an electrical system, including those of the conductor.

Stress control in high voltage cable terminations can be effected either resistively or capacitively by coupling with the energised centre conductor of the cable. A fibre optic cable, however, has no such conductor and in some respects can be considered to be more similar to a high voltage insulator. A high voltage insulator is designed to control surface leakage currents by the provision of sheds on its surface. The sheds have several functions; increasing the creepage distance, often to more than three times the actual phase-to-ground distance; provision of numerous "dry" areas of relatively high resistance, which can maintain the leakage currents at acceptably low levels; and the provision of protected areas which limit the deposition of pollutants.

By comparison, the diameter of a fibre optic cable is typically one tenth to one hundredth that of a high voltage insulator and the fibre optic cable has negligible strength. The provision of shedded areas to produce the same result as in typically high voltage insulators is clearly impractical and other solutions must therefore be sought to both problems.

According to the present invention there is provided an assembly comprising a high voltage conductor and a fibre optic cable located externally along the conductor so that it is subject to the electrical field thereof, characterised in that said fibre optic cable leaves the conductor at a given location to extend freely through the atmosphere to earth, said fibre optic cable having a substantially non-tracking outer jacket (52), a non-metallic strengthing member, one or more fibre optic elements and a compatible protective filler, wherein the filler eliminates the existence of significant elongate voids within the cable, the jacket being made from a material so as to carry any leakage current to earth, said assembly further comprising electrically- conductive stress control means at said given location and through which the fibre optic cable passes, said stress control means having an outlet through which the fibre optic cable leaves, to extend to earth, the fibre optic cable being spaced from the outlet so that any electrical stress on the fibre optic cable arising from the electric field produced by the conductor, is substantially insufficient to cause damage to the fibre optic cable.

The present invention provides an assembly which prevents, or at least reduces, damage to the fibre optic cable located in the vicinity of the high voltage conductor, including the region where the fibre optic cable leaves the conductor.

The fibre optic cable may be helically wound around the conductor, which may be an overhead line conductor. Such an assembly also permits the fibre optic cable to be used in close proximity to other high voltage equipment, for example, switchgear or transformers.

The fibre optic cable may be of any suitable configuration, and may, for example, comprise one or more optic fibres, each within its individual sheath or sheaths, and where more than one fibre is present, these may be grouped together within a single outer sheath.

The filler is arranged substantially to eliminate, or at least inhibit, the formation or existence of significant elongate voids, or the significant transmission of moisture within the cable in the event of puncture of said outer protective jacket. The same filler may be used to achieve each of these results, or separate fillers may be required.

The compatible filler may be incorporated into the construction during manufacture, and may comprise a similar material to the jacket; a gum-like material, for example based on silicone, butyl, or ethylene propylene elastomers; a wax or jelly-like material for example a petroleum jelly; or an oil which may be incorporated during manufacture or subsequently drawn into the interstices of the construction. The filler may be of the same material as, and integral with, the cable jacket, such that filling of the cable, for example by complete impregnation of a braided component thereof, is effected when the jacket is added during manufacture.

The jacket and filler may be subsequently cross-linked by high energy radiation or chemical means.

as the jacket is insulating, having a resistance of more than about 10⁷ or 10⁸ ohms per cm length, then it should either be encased in a further jacket of a non-tracking insulating material, or made entirely from such non-tracking insulating material. Thus, even though there may be an appreciable difference in potential between the conductor and the cable, the cable jacket has a protective outer surface. Where the fibe optic cable is required to extend between phase potential and ground potential, the outer jacket should have a resistance of at least about 10⁷ or 10⁸ ohms per cm length. If the resistance of the outer jacket of such a cable were of significantly lower potential, then the leakage current flowing therealong, and the power dissipation, could be unacceptably high. Thus, it will be understood that at higher voltage electrically tracking along the cable surface has to be minimised. The particular resistance limits will, accordingly, be dependent on the operating voltge to which the cable is subject.

It is necessary to provide filling for the fibre optic cable when an insulating outer covering is provided. Filling or blocking the cable is particularly important where the cable extends between locations at appreciable different voltages, for exmaple from a conductor at phase voltage to ground potential. However, ingress of moisture at any part of the cable may cause long term damage to its optical properties, if water comes into contact with the glass fibre, for example.

The electrically conductive stress control means can comprise a housing, of conductive polymeric material or metal, for example, that is mounted on the conductor, with the cable leaving the conductor and passing towards a site of significantly different electrical potential, e.g earth potential, through the appreciably-reduced field environment of the housing.

The housing may thus provide an enclosure that is substantially free from the electric field associated with the high voltage conductor, so that the fibre optic cable can leave the conductor in the vicinity of the housing and can safely be led away from the high voltage conductor to, or at least towards a position at a much lower potential. Thus, the housing need extend away from the conductor only so far as to ensure that when the fibre optic cable exits therefrom into any electric field of the conductor, the field strength is too small to effect any substantial damage of the cable or have such adverse effects as discussed above. To this end, the configuration of the housing may be such as to reduce the effect of the electric stress from the field of the conductor. Advantageously the cable exit of the housing may open outwards away from the conductor, being conical or bell-shape for example. It will be appreciated that the configuration, including the shaping and size of the housing may be different for high voltage conductors of different voltage ratings, so as to optimise the electrical protection of the fibre optic cable. It will be understood that the function of the housing is to act in a manner similar to that of a Faraday Cage, and thus it need not completely physically enclose the fibre optic cable. Furthermore, the housing will not, in general, be required to carry any appreciable electric current.

It is further envisaged that an electrically-conductive housing may be arranged to protect the cable at the location where the cable is brought to earth potential.

Preferably the housing has a passage therethrough and an inlet and an outlet spaced from but in communiction with the passage, whereby the high voltage conductor extends through the passage, and supports the housing, and the fibre optic cable is arranged to leave the conductor just outside the housing, to enter through the inlet and to exit from the housing through said outlet. It will be appreciated that the fibre optic cable should leave the conductor, and thus enter the housing, at a position close enough to the housing such that no significant potential drop exists along the fibre optic cable. Preferably, the fibre optic cable should not extend laterally of the high voltage conductor for more than about three times the diameter of the conductor before entering the conductive housing.

Alternatively, the fibre optic cable may enter the housing into the passage together with the conductor, and thus leave the conductor within the housing itself.

The housing may comprise two half shells that are secured together, by screws for example, so as to allow the conductor to pass therethrough and so as to extend transversely thereof, preferably flaring outwardly, to guide the fibre optic cable away from the conductor.

The housing may be split at one end, for example by being bifurcated, so that it can be pushed on to the conductor, and may be provided with a closure cap, as a screw fit, push fit or snap-on for example. Alternatively, or in addition, the housing may be a two-part housing with a suitable closure mechanism, or be of a one-part wraparound configuration. The housing may be substantially elongate, or may have some other shape, for example a T-shape whereby the arms of the T extend along the conductor.

In one configuration, the housing is generally elongate, having bifurcations at one end leading to a transverse passage receiving the conductor, with an outlet at the other end of the housing leading the fibre optic cable away from the conductor.

Preferably the housing is environmentally sealed on to the high voltage conductor, advantageously by means of electrically conducting mastic or sealant.

Environmental protection, for example from water or salt or other pollutants, of the fibre optic cable after leaving the housing may be provided by an electrically-insulating, non-tracking preferably tubular, member that interengages with the housing and leads the cable away therefrom, advantageously all the way to the earthed location. This member may be convoluted and/or shedded on its outer surface.

In this case, the fibre optic cable must be protected by completely filling the region between the cable and the enclosing housing and/or insulating member. One way of achieving this is to arrange for the insulating member to be shrinkable, for example heat-shrinkable, on to the cable, preferably with an internal sealant or adhesive coating, for example a mastic or a hot melt adhesive. Another way is to ensure that the region between the cable and the insulating member is filled with an oil, resin, foam, or other suitable insulating medium. With such provision, the sealing or the housing on to the conductor is not so important, and may be dispensed with entirely.

In an alternative configuration of the assembly a second stress control means may be located at a position where the cable, initially subject to a high voltage, approaches or reaches a much lower, for example earth, potential. Such stress control means may act as an earth leakage current collector and thus ensure safe earthing of the cable without causing any appreciable electrical damage thereto or minimise other adverse effects of the leakage current.

The cable can be disposed within and guided away from the housing by a tubular member.

The tubular member may have a convoluted and/or shedded outer surface, for extending the creepage path length. Its inner surface may be convoluted. The tubular member is insulating, non-tracking and weather resistant, and is filled to prevent water deposition therealong.

This invention will now be described by way of example with reference to the drawings, in which:-
Figure 1 is a sectional elevation of a housing for use in an assembly according to the invention;
Figure 1a is a sectional elevation of half of another embodiment of housing;
Figure 2 is a side elevation of one embodiment of an assembly including the housing of Figure 1;
Figures 2a and 3 are side elevations of other embodiments of the assemblies according to the inventions;
Figures 4a and 4b show, partly cutaway and in cross section respectively, a modification of part of the assemblies of Figures 2, 2a and 3.
Figure 5 is a vertical section through another housing that is suitable for effecting ground connection of the fibre optic cable in an assembly according to the invention; and
Figure 6 is a schematic representation of the assembly of Figure 3 positioned adjacent the termination of a high voltage conductor at a transformer station, and including the housing of Figure 5.

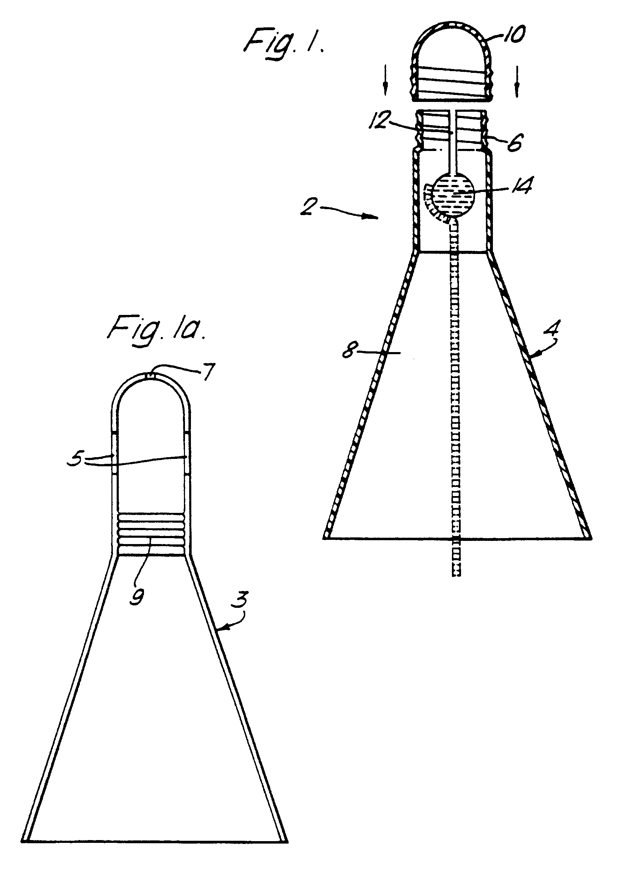

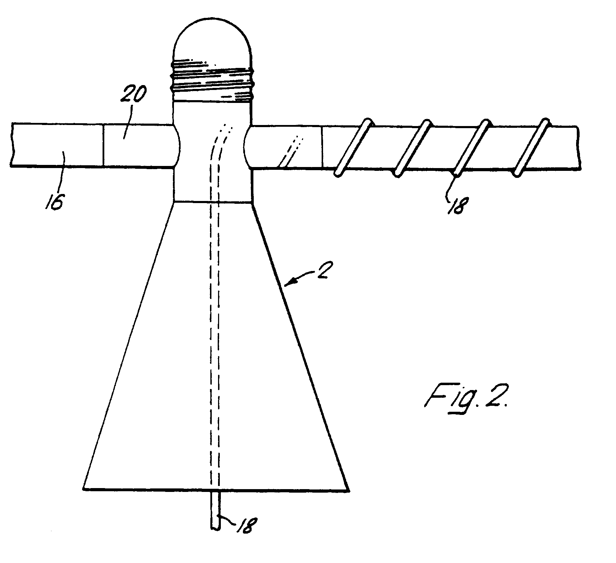

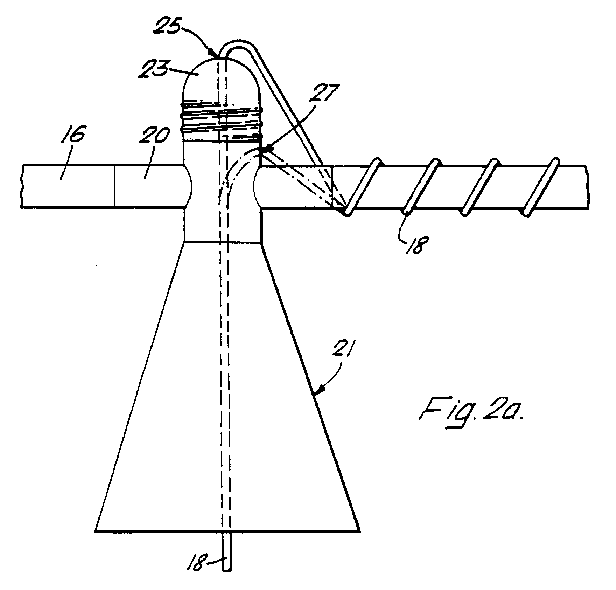

Referring to Figure 1, a housing 2 is made from an electrically-conductive polymeric material, and provides electrical protection for a fibre optic cable that extends along a high voltage conductor. The conductor and cable are shown in outline in Figure 1, and will be described in more detail with reference to Figure 2. The housing 2 comprises a first elongate part 4 that is open at each end and that has an upper generally right cylindrical portion 6 that continues downwards into a generally conical portion 8. The housing 2 has a second part 10, that provides a closure cap for the housing portion 6, and for this purpose the closure cap 10 has an internal thread and the cylindrical portion 6 has a mating external thread.

The cylindrical portion 6 is bifurcated at its open end so that slit 12 therein extends from the open end to generally circular openings in opposing side walls of the portion 6 that define a generally tubular passageway 14 therethrough.

Figure 2 shows the housing 2 of Figure 1 mounted on a high voltage uninsulated overhead conductor 16 that has a fibre optic cable 18 wound helically therearound. The cable 18 may have any suitable construction as hereinbefore described. The bifurcated cylindrical portion 6 of the housing 2 is spread apart so as to enlarge the slit 12 to an extent that the conductor 16 can pass therealong so as to be located within the housing passageway 14. The fibre optic cable 18 extends with the conductor 16 into the passageway 14, but within the housing 2 is lead off the conductor 16 and down through the open end of the conical housing portion 8. A conductive mastic 16 where it extends into, through, and out of the housing 2 to prevent ingress of moisture into the housing along the passageway 14. The slit 12 is closed, and the housing cap 10 screwed on to the cylindrical portion 6, thereby sealing the top of the housing 2.

Figure 1a shows one half 3 of a cast metal housing, that is secured to a corresponding half shell by screws or bolts so as to enclose the high voltage conductor. The housing formed from the half shells 3 functions electrically in the same way as the housing 2 of Figure 1, but each half shell extends integrally above and below the conductor, one on each side thereof. Thus, the conductor extends through a channel 5, the fibre optic cable enters through aperture 7, and internal ribs 9 provide for securing of a protective tube (not shown) for guiding the fibre opric cable transversely away from the conductor.

Referring to Figure 2a, the assembly has a housing 21 that differs from the housing 2 in its provision for entry of the fibre optic cable 18. In this arrangement, the cable 18 passes away from the conductor 16 at a distance of about 50mm before the conductor enters the housing. The cable 18 then extends up to the housing cap 23 that has an aperture 25 that allows the cable to pass down into the housing 21. In another alternative configuration, an inlet aperture 27 for the optical cable 18 is on the side of the cap, and the path of the cable 18 is then as shown by the broken lines in Figure 2a. Since the cable 18 enters the housing 21 through aperture 25, or 27, rather than entering along the conductor 16, as shown in Figure 2, there will be no chafing between the fibre optic cable 18, conductor 16 and the housing passage entrance. Furthermore, since the cable 18 is only away from the conductor 16 for a short distance before entering the conductive housing, no appreciable electrical stress is applied to the cable.

The configuration of the housings 2 and 21 is such that in the region where the fibre optic cable 18 extends out from the conical portion 8 thereof, the electric stress on the cable arising from the field associated with the conductor 16 is sufficient to cause damage to the cable or other adverse effects. To this end, parameters such as the length of the housing 2 and the angle of the conical portion 8 are selected in accordance with the voltage rating of the conductor 16. For a 33kV conductor, for example, the length of the housing extending therebelow is typically 5cm to 8cm, with the conical surface of the housing making an angle of approximately 10° with the vertical (as seen in the Figures).

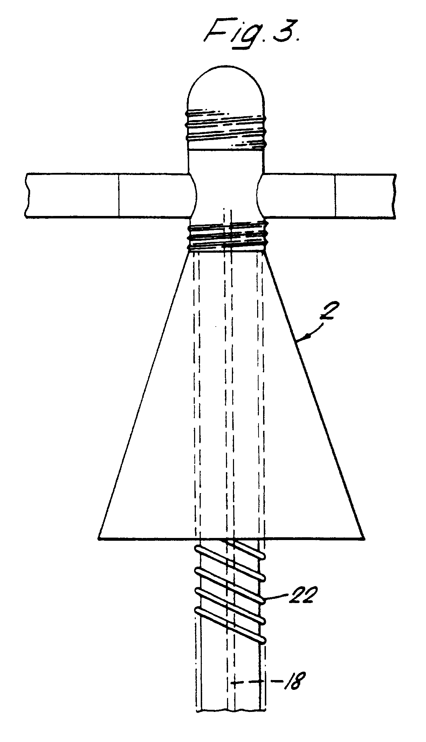

In the modified assembly shown in Figure 3, further, mechanical, protection of the fibre optic cable 18 is provided on leaving the housing by enclosing it within a convoluted tube 22 of electrically insulating polymeric material. Tube 22 engages internally with a threaded section 23 of the cylindrical housing portion 6, and extends downwards from the open end of the housing 2.

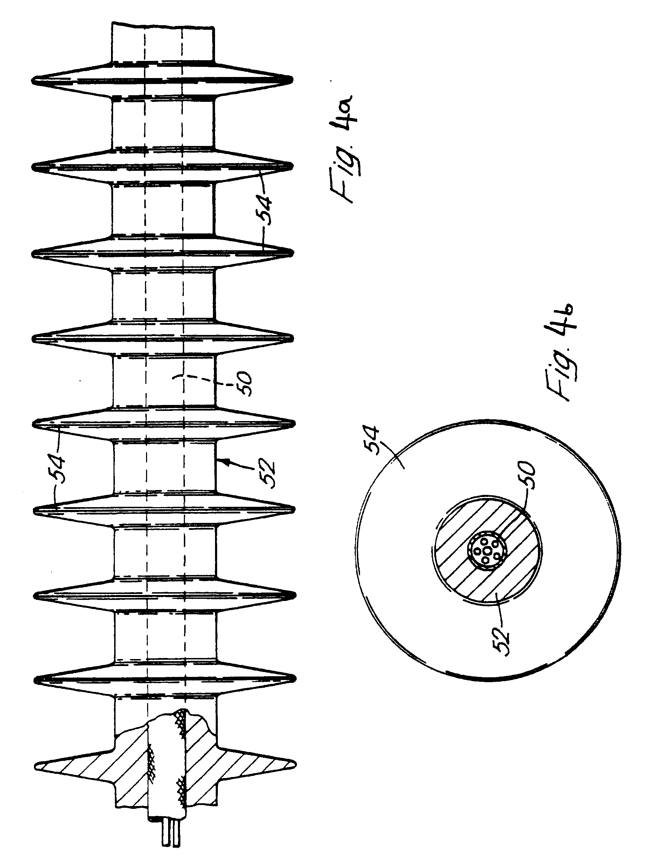

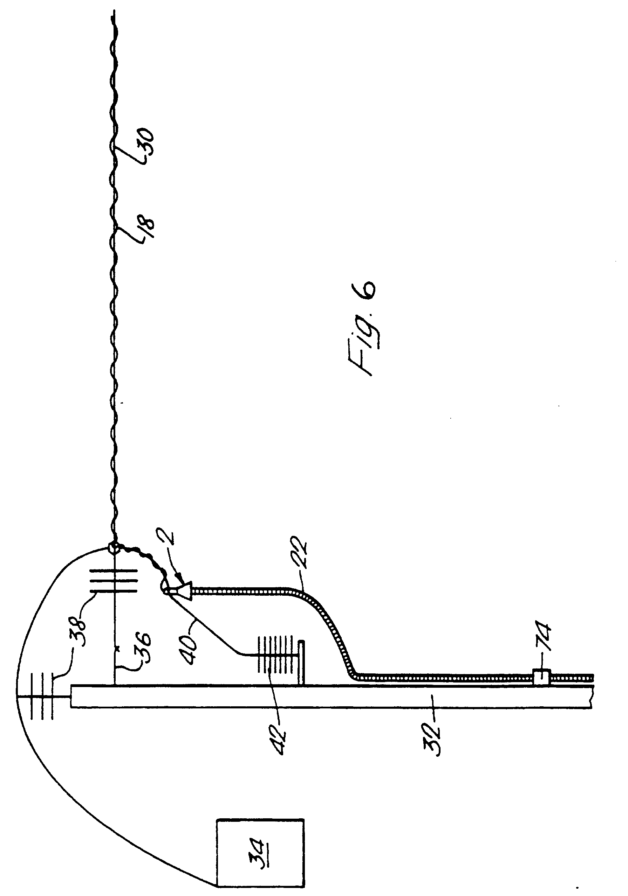

Figures 4a and 4b refer to alternative means to the convoluted tubings 22 and 28 for guiding a fibre optic cable from a high voltage area to a lower voltage area, and is particularly, though not exclusively applicable in higher voltage applications, say above 132kV, where increased creepage path length is required. Thus, a fibre optic cable 50, which comprises five fibre optical fibres surrounding a strengthening member in a fully water-blocked construction, is embedded in a non-tracking outer jacket 52 that has sheds 54 on its outer surface.

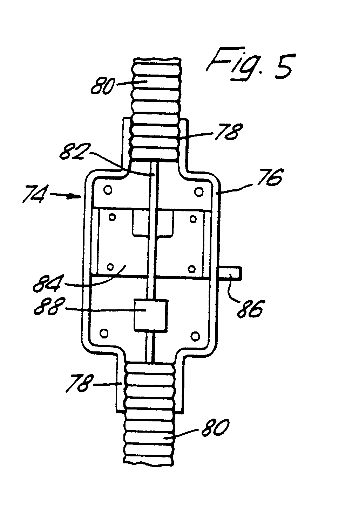

Figure 5 shows a housing 74 that is suitable for attachment to the convoluted tubing that guides the fibre optic cable from the overhead conductor to its station at earth potential and serves as a stress control arrangement, an earthing medium and earth leakage current collector. It may also serve as an enclosure for a fibre optic splice or connector.

The housing 74, shown open in FIGURE 5, comprises two generally semi-cylindrical brass half-shells 76, each of which has an integrally-ridged neck portion 78 at each end for gripping the convoluted tubing 80 that guides the fibre optic cable 82. A further pair of generally semi-cylindrical brass half-shells 84 are located within the housing 74 and are clamped in contact with the half-shells 76 on closure of the housing. The non-tracking convoluted tubing 80 extends into the housing 74 and the fibre optic cable 82 exits therefrom and passes into a passageway formed by the half-shells 84. The larger upper part of the passageway encloses the fibre optic cable loosely, and is filled with a potting composition, and the narrower, lower part of the passageway grips the fibre optic cable firmly, but not so as to effect any damage thereto. Thus, the housing 74 makes direct electrical contact with the outer non-tracking tubing 80 and with the fibre optic cable 82. A conductive connecting stud 86 is mounted on the outside of one of the half-shells 76, and a conductor (not shown) extends therefrom to a point at earth potential.

The housing 74 contains a splice enclosure, shown diagrammatically at 88, and the fibre optic cable passes therefrom into a further portion of the convoluted tubing 80 for onward transmission to a decoding station.

It is to be understood that in many instances, the fibre optic cable may not need to be protected, such as by a convoluted tube, and that this may be so whether or not the high voltage stress control arrangement is applied to the cable. Thus, referring to Figure 3, if there is no requirement for the protective insulating, non-tracking convoluted tubing 80 to protect the fibre optic cable 82, then the outer pair of half shells 76 of the earth leakage current collector 74 may be dispensed with. In this case, the half shells 84 would be directly connected to earth potential.

Referring to Figure 6, a high voltage conductor 30 with the fibre optic cable 18 spirally round thereon extends from one switchgear/transformer station (not shown), over a ten meter high support pole 32, and thence to a terminating switchgear/transformer station 34. The conductor 30 is secured to the pole 32 by tensioners 36 and is electrically isolated therefrom by insulators 38. Just before reaching the pole 32, the fibre optic cable 18 is lead away from the main conductor 30 along a drop wire 40, that at one end is crimped on to the conductor 30 and that at its other end is connected to a surge diverter 42 and thence to the pole 32 at earth potential. Thus, the drop wire 40 is at the same voltage, 33kV say, as the conductor 30. The fibre optic cable 18 is taken off the drop wire 40 in advance of the surge diverter 42 via the electrically-conductive housing 2 or 21, and thence through the insulated convoluted tubing 22 that is secured to the pole 32. At the bottom end of the pole the fibre optic cable 18 leaves the conductive tubing 22 and enters into switchgear (not shown), which is at earth potential. This occurs after the cable and tubing has been earthed, for example, as shown by means of the housing 74.

It will be appreciated that usually the conductor 30 will be accompanied by two other conductors, thus providing a three-phase power supply, but only one of the conductors will, in general be required to carry a fibre optic cable.

## Claims

1. An assembly comprising a high voltage conductor (16,62,30) and a fibre optic cable (18,64) located externally along the conductor so that it is subject to the electrical field thereof, characterised in that said fibre optic cable leaves the conductor at a given location to extend freely through the atmosphere to earth, said fibre optic cable having a substantially non-tracking outer jacket (52), a non-metallic strengthening member, one or more fibre optic elements and a compatible protective filler, wherein the filler eliminates the existence of significant elongate voids within the cable, the jacket being made from a material so as to carry any leakage current to earth, said assembly further comprising electrically-conductive stress control means at said given location and through which the fibre optic cable passes, said stress control means having an outlet through which the fibre optic cable leaves, to extend to earth, the fibre optic cable being spaced from the outlet so that any electrical stress on the fibre optic cable arising from the electric field produced by the conductor, is substantially insufficient to cause damage to the fibre optic cable.

2. An assembly according to Claim 1, characterised in that the electrically-conductive stress-control means is a housing mounted on the conductor, and has a passage therethrough in which the high voltage conductor is located.

3. An assembly according to Claim 1 or Claim 2, characterised in that the cable comprises an outer tubular member (22).

4. An assembly according to Claim 3, characterised in that the tubular member is convoluted, and/or has a shedded outer surface.

5. An assembly according to Claim 2, characterised in that the housing (2,21) is made of conductive polymeric material.

6. An assembly according to Claim 2, characterised in that the housing (2,21,) is made of metal.

7. An assembly as claimed in Claim 2, Claim 5 or Claim 6, characterised in that the housing (2,21) increases in cross section in the direction away from the conductor (16).

8. An assembly as claimed in Claim 2, Claim 5, Claim 6 or Claim 7, characterised in that the housing (2,21) comprises two half shells secured together.

9. An assembly according to Claim 2, Claim 5, Claim 6 or Claim 7, characterised in that the housing (2) is split at one end so that it can be pushed onto the conductor (16), and is provided with a closure cap (10) for said one end and serving to retain the housing (20) on the conductor (16).

10. an assembly according to any preceding claim, characterised by a second stress control means (74 - Fig 5) located on the fibre optic cable where the cable approaches or reaches a much lower potential than that at the conductor.

## Patentansprüche

1. Anordnung mit einem Hochspannungsleiter (16, 62, 30) und einem Faseroptikkabel (18, 64), das an der Außenseite längs des Leiters so angeordnet ist, daß es dessen elektrischen Feld ausgesetzt ist, dadurch **gekennzeichnet,** daß das Faseroptikkabel den Leiter an einer gegebenen Stelle verläßt, um frei durch die Atmosphäre zur Erde zu verlaufen, wobei das Faseroptikkabel eine im wesentlichen nicht-spurende Außenhülle (52), ein nichtmetallisches Verstärkungsglied, ein oder mehrere Faseroptikelemente und ein kompatibles schützendes Füllmaterial aufweist, wobei das Füllmaterial das Vorhandensein von wesentlichen, länglichen Lücken innerhalb des Kabels verhindert, wobei die Umhüllung aus einem Material gefertigt ist, welches etwaige Leckströme zur Erde ableitet, wobei die Anordnung ferner an der gegebenen Stelle eine elektrisch leitfähige Belastungsschutzeinrichtung aufweist, durch die das Faseroptikkabel hindurchtritt, wobei die Belastungsschutzeinrichtung einen Auslaß hat, durch den das Faseroptikkabel austritt, um zur Erde zu verlaufen, wobei das Faseroptikkabel einen Abstand von dem Auslaß hat, so daß eine etwaige elektrische Belastung auf das Faseroptikkabel, die durch das vom Leiter erzeugte elektrische Feld verursacht wird, im wesentlichen nicht ausreicht, um eine Beschädigung des Faseroptikkabels zu verursachen.

2. Vorrichtung nach Anspruch 1,
dadurch **gekennzeichnet,** daß die elektrisch leitfähige Belastungsschutzeinrichtung ein Gehäuse ist, das an dem Leiter befestigt ist und einen Durchlaß aufweist, in dem der Hochspannungsleiter angeordnet ist.

3. Vorrichtung nach Anspruch 1 oder 2,
dadurch **gekennzeichnet,** daß das Kabel ein äußeres rohrförmiges Element (22) aufweist.

4. Anordnung nach Anspruch 3,
dadurch **gekennzeichnet,** daß das rohrförmige Element gewendelt ist und/oder eine gerippte Außenfläche hat.

5. Anordnung nach Anspruch 2,
dadurch **gekennzeichnet,** daß das Gehäuse (2, 21) aus leitfähigem Polymermaterial ist.

6. Anordnung nach Anspruch 2,
dadurch **gekennzeichnet,** daß das Gehäuse (2, 21) aus Metall ist.

7. Anordnung nach Anspruch 2, Anspruch 5 oder Anspruch 6,
dadurch **gekennzeichnet,** daß das Gehäuse (2, 21) sich im Querschnitt in Richtung von dem Leiter (16) weg erweitert.

8. Anordnung nach Anspruch 2, Anspruch 5, Anspruch 6 oder Anspruch 7,
dadurch **gekennzeichnet,** daß das Gehäuse (2, 21) zwei aneinander befestigte Halteschalen aufweist.

9. Anordnung nach Anspruch 2, Anspruch 5, Anspruch 6 und Anspruch 7,
dadurch **gekennzeichnet,** daß das Gehäuse (2) an einem Ende gespalten ist, so daß es auf den Leiter (16) aufgeschoben werden kann, und mit einer Verschlußkappe (10) für dieses eine Ende versehen ist, welche dazu dient, das Gehäuse (20) an dem Leiter (16) festzuhalten.

10. Anordnung nach einem der vorangehenden Ansprüche, **gekennzeichnet** durch eine zweite Belastungsschutzeinrichtung (74 - Fig. 5) die an dem Faseroptikkabel dort angeordnet ist, wo das Kabel sich einem wesentlich niedrigeren Potential als das des Leiters annähert oder es erreicht.

## Revendications

1. Ensemble comprenant un conducteur à haute tension (16, 62, 30) et un câble à fibre optique (18, 64) situé à l'extérieur le long du conducteur de façon qu'il soit soumis au champ électrique de ce dernier, caractérisé en ce que ledit câble à fibre optique quitte le conducteur à un endroit donné pour s'étendre librement à travers l'atmosphère jusqu'à la terre, ledit câble à fibre optique ayant une enveloppe extérieure (52) sensiblement sans cheminement électrique, un élément de renforcement non métallique, un ou plusieurs éléments à fibre optique et un matériau de remplissage protecteur compatible, dans lequel le matériau de remplissage élimine l'existence de vides oblongs importants à l'intérieur du câble, l'enveloppe étant faite d'un matériau propre à conduire à la terre tout courant de fuite, ledit ensemble comprenant en outre à l'endroit donné, un moyen électriquement conducteur de contrôle de contrainte à travers lequel passe le câble à fibre optique, ledit moyen de contrôle de contrainte présentant une sortie par laquelle le câble à fibre optique peut sortir pour s'étendre jusqu'à la terre, le câble à fibre optique étant espacé de la sortie de façon que toute contrainte électrique sur le câble à fibre optique, provenant du champ électrique produit par le conducteur, soit pratiquement insuffisante pour provoquer un endommagement du câble à fibre optique.

2. Ensemble selon la revendication 1, caractérisé en ce que le moyen de contrôle de contrainte électriquement conducteur est un boîtier monté sur le conducteur et présente un passage le traversant dans lequel est situé le conducteur à haute tension.

3. Ensemble selon la revendication 1 ou 2, caractérisé en ce que le câble comprend un élément tubulaire externe (22).

4. Ensemble selon la revendication 3, caractérisé en ce que l'élément tubulaire est circonvoluté et/ou présente une surface externe à ailettes d'isolateur.

5. Ensemble selon la revendication 2, caractérisé en ce que le boîtier (2, 21) est fait d'un matériau polymère conducteur.

6. Ensemble selon la revendication 2, caractérisé en ce que le boîtier (2, 21) est fait de métal.

7. Ensemble selon la revendication 2, 5 ou 6, caractérisé en ce que le boîtier (2, 21) augmente en section transversale dans le sens s'écartant du conducteur (16).

8. Ensemble selon la revendication 2, 5, 6 ou 7, caractérisé en ce que le boîtier (2, 21) comprend deux demi-coquilles fixées l'une à l'autre.

9. Ensemble selon la revendication 2, 5, 6 ou 7, caractérisé en ce que le boîtier (2) est scindé à une extrémité de façon qu'il puisse être poussé sur le conducteur (16), et en ce qu'il est muni d'une coiffe de fermeture (10) pour ladite extrémité et servant à retenir le boîtier (20) sur le conducteur (16).

10. Ensemble selon l'une quelconque des revendications précédentes, caractérisé par un second moyen de contrôle de contrainte (74 - figure 5) situé sur le câble à fibre optique là où le câble s'approche de ou atteint un potentiel beaucoup plus faible que celui que l'on a à l'endroit du conducteur.
